# EUROPEAN PATENT SPECIFICATION

(11) **EP 4 197 725 B1**
(45) Date of publication and mention of the grant of the patent: **23.07.2025**
(21) Application number: 21215575.8
(22) Date of filing: 17.12.2021
(51) Int. Cl.: B26B 21/52, B26B 21/22

(54) **RAZOR CONNECTOR**
RASIERERVERBINDER
CONNECTEUR DE RASOIR

(43) Date of publication of application: 21.06.2023
(73) Proprietor: BIC Violex Single Member S.A., 14569 Anoixi (GR)
(72) Inventor: Kerosis, Christos, 145 69 Anoixi (GR); Paspatis, Georgios, 145 69 Anoixi (GR)
(74) Representative: Peterreins Schley

(56) References cited:
- EP-A1- 0 951 971
- DE-U1- 8 815 015
- US-A1- 2017 087 732
- US-A1- 2020 070 375

## Description

### Technical Field

The present disclosure relates to the field of razors. More specifically, the present disclosure relates to razor connectors which attach a razor cartridge to a razor handle.

### Background

Razors are well known everyday items to shave off unwanted bodily hair, e.g. beard hairs. The razor may comprise a razor cartridge including blades configured to cut the hair and a razor handle used attached thereto. In use, a user holds the razor handle and brings the razor cartridge into contact with a portion of skin. By movement of the razor handle the razor cartridge moves in a shaving direction and unwanted hair is removed. The razor cartridge may be releasably connected to the razor handle via a razor connector. A releasable attachment of the razor cartridge may allow exchanging the razor cartridge, for example when the blades have become dull, instead of discarding the entire razor. However, razor connectors typically comprise complex mechanisms requiring multiple components, for example springs, pushers, push buttons, releasing mechanisms etc. The complex mechanisms increase the assembly complexity and increase the production time. Further, the multiple components, especially those that are movable, increase the risk of system failure as they are more prone to breaking.

German Utility Model with Publication Number DE8815015 U1 discloses a razor consisting of a handle, at the front end of which there is a razor blade unit on a head with a single or double blade permanently embedded in a plastic housing. The blade unit is arranged interchangeably by means of an openable and closable fork holding element, the fork holder consists of two side arms, which can be pivoted outwards and inwards via guides by means of a sliding element disposed in the head and thereby engaging the razor blade unit in one pivoting position. United States Patent Application Publication Number US2017087732 A1 discloses a razor comprising a razor cartridge, with a housing forming a front surface and a rear surface opposite said front surface, said rear surface comprising a pair of distally positioned arc shaped receiving regions and a camming surface, an adapter having a front engagement surface and a rear engagement surface opposite said front engagement surface, said front engagement surface comprising a pair of outwardly facing arc shaped bearings for mating into said pair of arc shaped receiving regions of said razor cartridge, and said rear engagement surface forming a recess and a pair of detents positioned on a wall formed from said adapter, said pair of detents protruding radially inward and a handle, comprising a distal end and a proximal end, said proximal end being shaped to removably engage said recess, said proximal end forming receiving regions to accept said pair of detents formed in said adapter wall.

The present disclosure aims to address the aforementioned issues in optimizing razor connectors.

### Summary

In a first aspect, the present invention defines a razor connector 10 configured to connect a razor cartridge 100 to a razor handle 12 as recited in claim 1.

In embodiments, the tongue may be a flexible tongue 14.

In embodiments, the at least one interlocking feature may be a recess 18, in particular a recess 18 configured to interlock with at least one protrusion of the razor cartridge 100.

In embodiments, the at least one interlocking feature may be an interlocking protrusion, in particular an interlocking protrusion configured to interlock with at least one recess of the razor cartridge 100.

In embodiments, the flap 16 may be integrally formed with the interlocking feature.

In embodiments, the flap 16 may be integrally formed with the tongue.

In embodiments, the flap 16, the interlocking feature and the tongue may be integrally formed.

In embodiments, the razor connector 10 may be a one-piece part.

In embodiments, the razor connector 10 may comprise a plurality of layers, in particular a plurality of layers substantially parallel to each other.

In embodiments, the at least one flap 16 may be configured to release the at least one interlocking part of the razor cartridge 100 from the at least one interlocking feature when actuated.

The at least one flap 16 comprises at least one protrusion 20, in particular at least one protrusion 20 extending towards the razor cartridge 100 when the razor cartridge 100 is connected to the razor connector 10.

The at least one protrusion 20 is configured to disconnect the razor cartridge 100 from the razor connector 10 upon actuation of the at least one flap 16 by pushing the interlocking part of the razor cartridge 100 out of the interlocking feature, in particular wherein the at least one protrusion 20 is configured to disconnect the razor cartridge 100 from the razor connector 10 upon actuation of the at least one flap 16 by pushing the razor cartridge's 100 protrusion of out of the razor connector's 10 recess 18.

In embodiments, the at least one protrusion 20 may be configured to preload the razor cartridge 100 when the razor cartridge 100 is connected to the razor connector 10.

In embodiments, the at least one flap 16 may be preloaded when the razor cartridge 100 is connected to the razor cartridge 100.

In embodiments, the razor connector 10 may comprise two flaps 16 opposing one another.

In embodiments, the razor connector 10 may comprise a receiving head 22 configured to receive a connector sleeve 102 of the razor cartridge 100.

In embodiments, the razor connector 10 may be integrally formed with the razor handle 12.

In embodiments, the tongue may extend from a distal end of the razor connector 10 and wherein the razor connector 10 is connected to the razor handle 12 at a proximal end and wherein the distal end and proximal end define a proximal-distal razor connector axis 24.

In embodiments, the at least one flap 16 may be arranged in proximal direction of the receiving head's 22 distal end.

In embodiments, the at least one protrusion 20 may be arranged at the distal end of the at least one flap 16.

In embodiments, the at least one flap 16 may comprise at least one actuation surface 26 configured to be actuated by a user to release the razor cartridge 100.

In embodiments, the at least one actuation surface 26 may be disposed substantially parallel to the proximal-distal razor connector axis 24.

In embodiments, the at least one actuation surface 26 faces away from the proximal-distal razor connector axis 24.

In embodiments, the at least one actuation surface 26 may comprise an indicator, more specifically a haptic indicator and in particular a protrusion, a dot, a cavity, a groove and/or a rubber element.

In embodiments, the at least one flap 16 may be moved away from the proximal-distal razor connector axis 24 when preloaded.

In embodiments, moving the at least one flap 16 towards the proximal-distal razor connector axis 24 may disconnect the razor cartridge 100 from the razor connector 10.

In embodiments, the razor connector 10 may have a top side 32 and bottom side 36.

In embodiments, the tongue may comprise a first section extending parallel to the proximal-distal razor connector axis 24 along the bottom side of the razor connector 10 and a second section diverging towards the top side 32 of the razor connector 10.

**In** embodiments, the tongue may have a polygonal cross-section, more specifically a square, rectangular or octagonal shape and in particular a rectangular shape.

**In** embodiments, a corner of the polygonal cross-section may be round.

**In** embodiments, the at least one protrusion 20 may be placed at the top side 32 of the razor connector 10.

**In** embodiments, the interlocking feature may be positioned proximally of the receiving head's 22 distal end, more specifically on the bottom side of the razor connector 10 on the receiving head 22 proximally of the receiving head's 22 distal end and in particular on the bottom side of the razor connector 10 on the receiving head 22 proximally of the receiving head's 22 distal end adjacent to the tongue.

**In** embodiments, a layer of the plurality of layers may have a thickness between about 5 µm to about 100 µm, more specifically between about 10 µm to about 50 µm and in particular between about 15 µm to about 30 µm.

**In** embodiments, a layer of the plurality of layers may have a thickness between about 0.05 mm to about 0.6 mm, more specifically between about 0.1 µm to about 0.4 mm and in particular between about 0.15 mm to about 0.3 mm.

**In** embodiments, the razor connector 10 may comprise a first polymer, in particular a photopolymer.

**In** embodiments, the razor connector 10 may comprise a second polymer, in particular an ABS-like polymer and/or polypropylene-like polymer.

**In** embodiments, the razor connector 10 may comprise a third polymer, more specifically a thermoplastic polymer and in particular ABS and/or polypropylene.

In embodiments, the razor connector 10 may comprise a fourth polymer, more specifically a thermoplastic elastomer and in particular a TPA, a TPC, a TPO, a TPS, a TPV, a TPZ and/or a TPU.

In embodiments, the at least one flap 16 may be connected to the receiving head 22 at a connection shoulder 28, wherein the connection shoulder 28 comprises the second and/or fourth polymer.

In embodiments, the flexible tongue 14 may comprise the second and/or fourth polymer.

In embodiments, the at least one flap 16 may comprise the first and/or third polymer.

In embodiments, the at least one protrusion 20 may comprise the first and/or third polymer. In embodiments, the tongue may be connected to a spring, more specifically a spring configured to allow the tongue to move along the proximal-distal razor connector axis 24 and in particular a spring that compresses and stretches along the proximal-distal razor connector axis 24.

In a second aspect, the present invention defines a razor system comprising a razor connector 10 according to any one of claims 1 to 13 and a razor cartridge 100, wherein the razor cartridge 100 is releasably attached to the razor connector 10.

In embodiments, the razor system may further comprise a razor handle 12 connected to the razor connector 10.

In a third aspect, the present invention defines a process for manufacturing a razor connector 10 according to any one of claims 1 to 13 comprising additive manufacturing, material jetting, fused filament fabrication, stereolithography and/or selective laser sintering.

### Description of the Drawings

Fig. 1 shows an isometric view of a razor handle with a razor connector according to the present disclosure.
Fig. 2 shows a top view of a razor connector according to the present disclosure.
Fig. 3 shows an isometric view of a razor connector according to the present disclosure.
Fig. 4 shows a cross-section of a razor connector according to the present disclosure.
Fig. 5 shows a bottom view of a razor connector according to the present disclosure.
Fig. 6 shows an isometric bottom view of a razor connector according to the present disclosure.
Fig. 7 shows an isometric top view of a razor connector according to the present disclosure and a not connected razor cartridge 100.
Fig. 8 shows an isometric top view of a razor connector according to the present disclosure and a connected razor cartridge 100.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

Razor connectors typically comprise multiple components, in particular multiple movable components. The number of components increases the required assembly time during production, as well as the risk of breaking of the razor connector.

Accordingly, in a first aspect, the present invention defines a razor connector 10 configured to connect a razor cartridge 100 to a razor handle 12 as recited in claim 1.

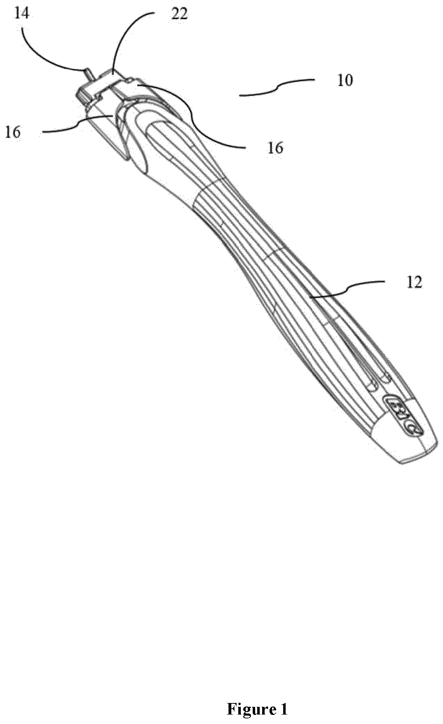

Figure 1 illustrates an isometric view of the exemplary razor connector 10 according to the present disclosure with the razor handle 12. The razor connector 10 may be an individual part and connected to the razor handle 12 by a detachable or non-detachable connection, for example a push-in connection. Manufacturing the razor connector 10 as an individual part may be advantageous if the razor handle 12 can be rapidly and efficiently manufactured, e.g. by injection molding, whereas the razor connector 10 can only be manufactured with more cost and time intensive processes, e.g. additive manufacturing. In that case, an individually manufactured razor handle 12 and razor connector 10 may reduce the manufacturing time and cost of the complete razor. Further, a releasably attached individually formed razor connector 10 could be exchanged if it is worn out, while retaining the razor handle 12. Alternatively, the razor connector 10 and the razor handle 12 may be integrally formed, which may reduce the assembly time even further.

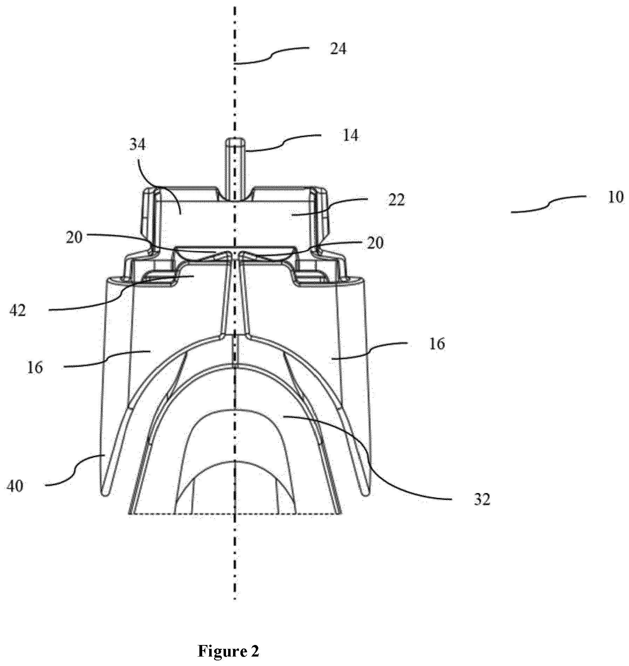

Figure 2 is a close-up top side view of the exemplary razor connector 10 of Figure 1. Figure 2 shows a proximal-distal razor connector axis 24 running centrically through the razor connector 10. In embodiments, the tongue 14 may extend from a distal end of the razor connector 10. Further, the razor connector 10 may be connected to the razor handle 12 at a proximal end (not illustrated, see Figure 1). The distal end and proximal end may define the proximal-distal razor connector axis 24. Figure 2 further shows two flaps 16 of the exemplary razor connector 10 being attached to the razor connector 10 towards their distal end. In embodiments, the razor connector may comprise one flap 16.

In embodiments, the flap 16 may comprise a proximal 40 and a distal section 42, wherein upon actuation the distal section 42 is configured to move towards the distal end of the razor connector 10. At the proximal section 40 of the flaps there is a gap between the flaps and the razor connector 10 allowing the proximal section 40 of the flaps 16 to be pushed towards the proximal-distal razor connector axis 24. The flap's 16 distal section 42 may move towards the proximal-distal razor connector axis 24 when the flap 16, in particular the flap's proximal section 40, is pushed towards the proximal-distal razor connector axis 24. Pushing the flap 16, in particular the flap's proximal section 40, towards the proximal-distal razor connector axis 24 may be considered an actuation.

The at least one flap 16 may be shell-shaped, e.g. comprise a wall section forming a cavity, in particular an open cavity. The flap 16 may be rigid, more specifically the at least one flap may have a Shore D hardness between about 50 to about 120, more specifically between about 55 to about 100 and in particular between about 60 to about 90, measured according to ISO 868:2003. Further, the at least one flap 16 may have an elongation at break between about 0.5 % to about 60 %, more specifically between about 1.0 % to about 25 % and in particular between about 1.8 % to about 15 %, measured according to ISO 527-1:2019.

In embodiments, the at least one interlocking feature may be a recess 18, in particular a recess 18 configured to interlock with at least one protrusion of the razor cartridge 100.

In embodiments, the at least one interlocking feature may be an interlocking protrusion, in particular an interlocking protrusion configured to interlock with at least one recess of the razor cartridge 100.

The interlocking protrusion and the recess may interlock through a snap-fit when the razor connector 10 is connected to a razor cartridge 100 on its distal end. The razor connector 10 or parts thereof and/or the razor connector or parts thereof may be flexible, improving the snap fit and allowing release of the snap-fit. When the at least one flap 16 is actuated, the distal section(s) may move in distal direction and push the razor cartridge towards the distal end.

In embodiments, the at least one flap 16 may be configured to release the at least one interlocking part of the razor cartridge 100 from the at least one interlocking feature when actuated. In embodiments, the at least one flap 16 may be configured to disconnect the razor cartridge 100 from the razor connector 10 upon actuation of the at least one flap 16 by pushing the interlocking part of the razor cartridge 100 out of the interlocking feature, in particular wherein the at least one flap 16 is configured to disconnect the razor cartridge 100 from the razor connector 10 upon actuation of the at least one flap 16 by pushing the razor cartridge's 100 protrusion of out of the razor connector's 10 recess 18. Pushing the interlocking part of the razor cartridge 100 out of the interlocking feature of the razor connector 10 shall not be construed as requiring the protrusion 20 to directly contact the interlocking feature or part. The protrusion may merely push against another part of the razor cartridge 100, whereby the razor cartridge 100 moves in distal direction, which in turn may lead to the push out.

As shown in Figure 2, the at least one flap 16 comprises at least one protrusion 20. In particular, the at least one flap 16 may be integrally formed with at least one protrusion 20. The at least one protrusion 20 may improve the disconnection mechanism of the razor connector 10. The at least one protrusion 20 extends towards the razor cartridge 100 when the razor cartridge 100 is connected to the razor connector 10. In embodiments, the at least one protrusion 20 may be arranged at the distal section 42 of the at least one flap 16. The at least one protrusion 20 at the distal section 42 of the flap 16 may increase the length of movement performed by the flap's 16 distal section, which may in turn push the connected razor cartridge 100 further away from the razor connector 10. The at least one protrusion 20 is configured to disconnect the razor cartridge 100 from the razor connector 10 upon actuation of the at least one flap 16 by pushing the interlocking part of the razor cartridge 100 out of the interlocking feature, in particular wherein the at least one protrusion 20 is configured to disconnect the razor cartridge 100 from the razor connector 10 upon actuation of the at least one flap 16 by pushing the razor cartridge's 100 protrusion of out of the razor connector's 10 recess 18.

In embodiments, the at least one flap 16 may be moved away from the proximal-distal razor connector axis 24 when preloaded. The at least one flap 16 moving away from the proximal-distal razor connector axis 24 may increase the distance the flap's 16 proximal section 40 needs to move for the actuation, which may reduce the risk of accidental actuation.

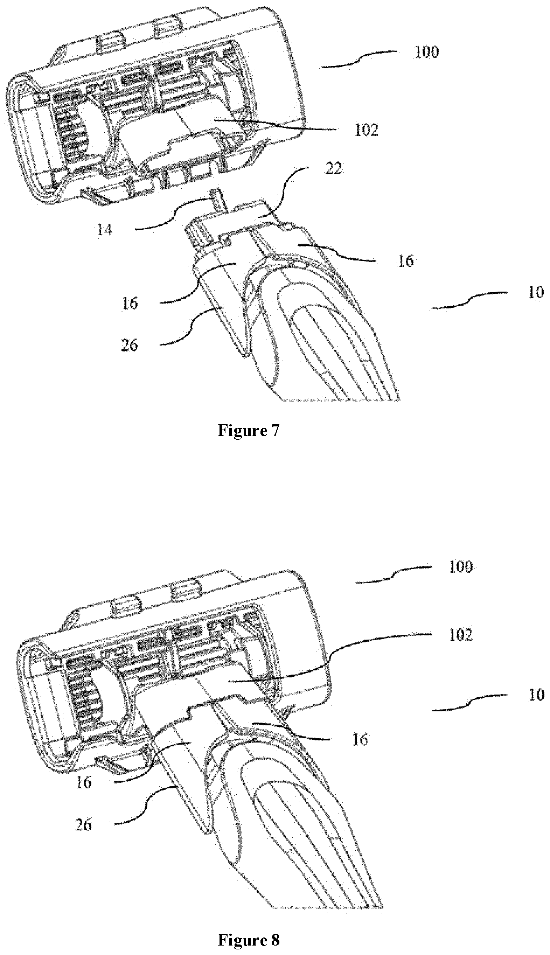

In embodiments, moving the at least one flap 16 towards the proximal-distal razor connector axis 24 may disconnect the razor cartridge 100 from the razor connector 10. In particular, pushing the at least one flap's 16 proximal section 40 towards the proximal-distal razor connector axis 24 may disconnect the razor cartridge 100 from the razor connector 10. A disconnected razor cartridge 100 is shown in Figure 7 and a connected razor cartridge 100 is shown in Figure 8.

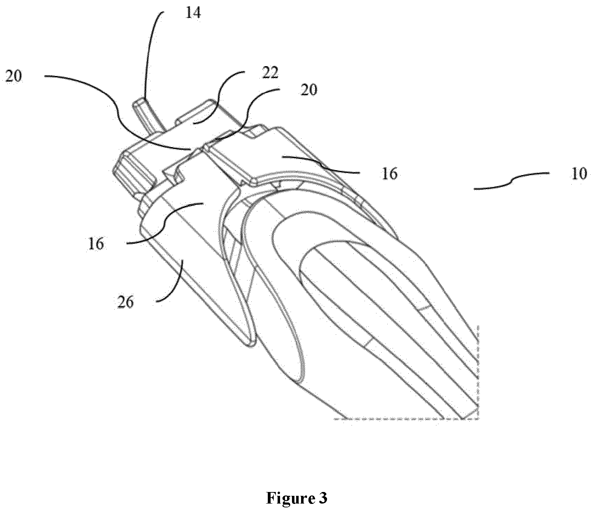

As depicted in Figure 3, in embodiments, the at least one flap 16 may comprise at least one actuation surface 26 configured to be actuated by a user to release the razor cartridge 100. The actuation surface 26 may facilitate the actuation by the user. The actuation surface 26 may be ergonomically shaped and/or comprise a region of higher friction and/or tack e.g. by including a rubber, to improve the handling by the user.

Further, as depicted in Figure 3, in embodiments, the at least one actuation surface 26 may be disposed substantially parallel or parallel to the proximal-distal razor connector axis 24. Arranging the at least one actuation surface 26 substantially parallel or parallel to the proximal-distal razor connector axis 24 may reduce the risk of accidental actuation. For example, if the at least one actuation surface 26 were arranged orthogonally to the proximal-distal razor connector axis 24, the actuation surface 26 may be actuated accidentally when pressed against the user's skin during the shaving action.

Figure 3 further depicts, that in embodiments, the at least one actuation surface 26 faces away from the proximal-distal razor connector axis 24. The at least one actuation surface 26 faces away from the proximal-distal razor connector axis 24 may be easier to actuate by the user, as no other part may block the access.

In embodiments, the razor connector 10 may comprise two flaps 16 opposing one another. This is shown in for example Figure 1. Arranging two flaps 16 opposing one another, may facilitate actuation of the flaps 16, as the force and reaction force of actuation may both be transferred into the flaps 16. Two opposing flaps 16 may be easily actuatable by a user's hand, in particular with his thumb and index finger.

As shown in Figure 3, in embodiments, the razor connector 10 comprises two actuation surfaces 26 facing away from the proximal-distal razor connector axis 24 on opposing sides of the proximal-distal razor connector axis 24. Arranging two actuation surfaces 24 opposing one another, may facilitate actuation of the flaps 16, as the force and reaction force of actuation may both be transferred into the flaps 16. Two opposing actuation surfaces 24 may be easily actuatable by a user with his hands, in particular his thumb and index finger.

The tongue may connect and/or slide into a corresponding feature of the razor cartridge 100, as shown in Figures 7 and 8. The tongue may restrict movement of the razor cartridge 100 relative to the razor connector 10 in certain axis. The tongue may restrict movement of the razor cartridge 100 relative to the razor connector 10 orthogonally to the proximal-distal razor connector axis 24 and/or pivotable movement around the proximal-distal razor connector axis 24. This may improve the connection between the razor connector 10 and the razor cartridge 100, in particular it may prevent accidental release of the razor cartridge 100. The tongue may however allow pivotable movement around an axis disposed orthogonally to the proximal-distal razor connector axis 24. This may in use allow the razor cartridge 100 to align to the surface of a user's skin. The tongue may allow the razor cartridge 100 to align to the user's skin by a pivotable movement but may also apply a restoring force on the razor cartridge 100 to return to its original orientation relative to the razor handle.

In embodiments, the tongue may be connected to a spring, more specifically a spring configured to allow the tongue to move along the proximal-distal razor connector axis 24 and in particular a spring that compresses and stretches along the proximal-distal razor connector axis 24.

In embodiments, the tongue may be a flexible tongue 14. The term "flexible tongue" within this disclosure may refer to an elongated structure, in particular a structure elongated at least partly along the proximal-distal razor connector axis 24, wherein the elongated structure comprises or consists of an elastic material. The term "flexible tongue" may refer to an elongated structure allowing pivotable movement of a connected part, in particular a razor cartridge" due to elastic deformation. Additionally or alternatively, the term "flexible tongue" may refer to a flexible elongated structure not comprising movable parts, such as springs or slidable parts.

The flexible tongue 14 may further reduce the assembly time of the razor connector. Further, the flexible tongue 14 may be integrally formed with other parts of the razor connector 10. The term "elastic material" within this disclosure may refer to a material which undergoes deformation when exposed to a force and returns, at least partly, to its original size and shape after the force is removed. Additionally or alternatively, the term "elastic material" within this disclosure may refer to a material which has an elongation at yield of at least 1 %, more specifically at least 1.5 % and in particular at least 2 %, measured according to ISO 527-1:2019.

In embodiments, different parts of the razor connector 10 may be integrally formed with other parts of the razor connector 10. This may decrease the assembly time of the razor connector 10.

In embodiments, the flap 16 may be integrally formed with the interlocking feature.

In embodiments, the flap 16 may be integrally formed with the tongue.

In embodiments, the flap 16, the interlocking feature and the tongue may be integrally formed. In embodiments, the flap 16, the interlocking feature, in particular a recess, and the flexible tongue 14 may be integrally formed.

In embodiments, the razor connector 10 may be a one-piece part. Manufacturing the razor connector 10 may decrease the assembly time of the razor connector 10 drastically. In particular, manufacturing the razor connector 10 as a one-piece part may lead to no assembly time for the razor connector 10 at all. Figures 1 to 8 show the razor connector 10 as a one-piece part.

To manufacture the razor connector 10 as a one-piece part different manufacturing technologies may be used. The razor connector 10 may be, in some instances, manufacturable by additive manufacturing technologies. The razor connector 10 may have a complex geometry, which may be efficiently manufacturable by additive manufacturing. In particular, the razor connector 10 may comprise multiple undercuts, which may make for example injection molding inefficient, especially if the razor connector 10 is intended to be manufactured as a one-piece part.

In embodiments, the razor connector 10 may be formed as a layered structure. The layered structure may comprise a plurality of layers, in particular a plurality of layers substantially parallel to each other. Additive manufacturing technologies, such as fused filament fabrication or material jetting may lead to a plurality of layers, in particular a plurality of layers substantially parallel to each other.

According to this disclosure, the at least one protrusion 20 may be configured to preload the razor cartridge 100 when the razor cartridge 100 is connected to the razor connector 10. Preloading the razor cartridge 100 may bias the razor cartridge 100 towards an angle relative to the razor handle 12, which may improve the handling of the razor for the user.

In embodiments, the at least one flap 16 may be preloaded when the razor cartridge 100 is connected to the razor cartridge 100. Preloading the at least one flap 16 when connecting the razor cartridge 100 may reduce the required force for actuating the at least one flap 16 to disconnect the razor cartridge, as at least part of the force is already provided due to the preloading.

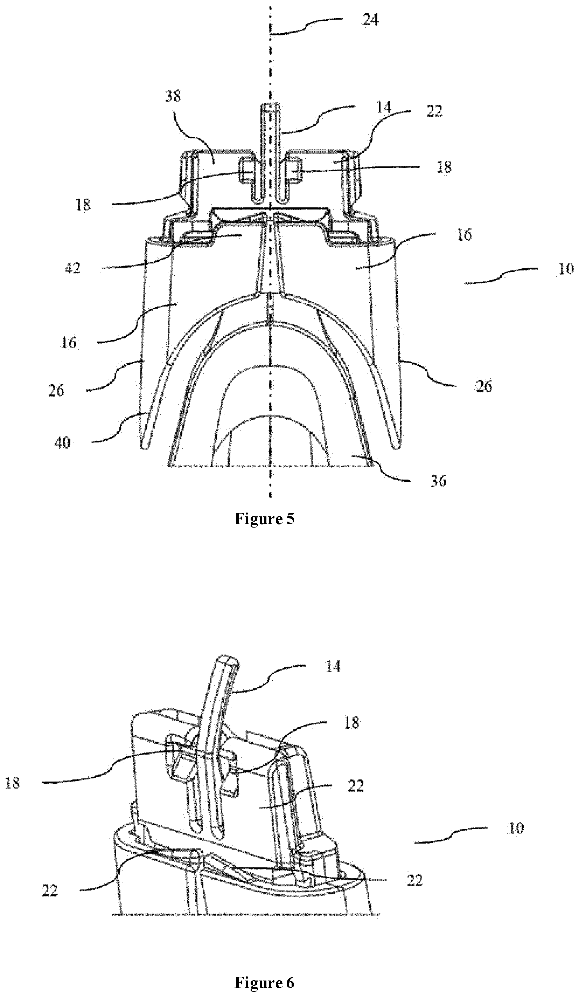

As depicted in Figure 6 and Figure 7, in embodiments, the razor connector 10 may comprise a receiving head 22 configured to receive a connector sleeve 102 of the razor cartridge 100. The receiving head 22 may align the tongue during its insertion into the razor cartridge 100. Further, the receiving head 22 may aid in preventing movement of the razor cartridge 100 orthogonally to the proximal-distal axis razor connector proximal-distal razor connector axis 24. The razor connector 10 may also connect to the razor connector 100 in other ways, in particular through other types of plug and socket connection types.

**In** embodiments, the razor connector 10 may be integrally formed with the razor handle 12. Integrally forming the razor connector 10 with razor handle 12 reduces the assembly time further.

As depicted for example in Figure 5, in embodiments, the at least one flap 16 may be arranged in proximal direction of the receiving head's 22 distal end. Arranging the at least one flap 16 proximally of the receiving head's 22 distal end may prevent unintentional interaction of the flap 16 with the razor cartridge 100.

In embodiments, the at least one actuation surface 26 may comprise an indicator, more specifically a haptic indicator and in particular a protrusion, a dot, a cavity, a groove and/or a rubber element. The haptic indicator may facilitate the identification of the actuation surface 26 by the user, in particular without looking at the razor connector 10 and only through haptic perception.

In embodiments, the razor connector 10 may have a top side 32 (shown in Figure 2) and a bottom side 36 (shown in Figure 5). The top side 32 may be the side facing against a shaving direction and the bottom side 36 the side facing towards the shaving direction. Alternatively or additionally, the top 32 and bottom 36 side may be defined relative to other components. The top 32 and bottom side 36 may be surfaces disposed parallel to the movement of the at least one flap 16 when the flap is actuated. Alternatively or additionally, the bottom side may be the razor connector's 10 side comprising the tongue, in particular the flexible tongue 14. Alternatively or additionally, the bottom side may be the razor connector's 10 side comprising the interlocking feature. Additionally, the top side 32 may be the side opposite of the bottom side 36.

As depicted in Figures 3, 4 and 6, in embodiments, the tongue may comprise a first section extending parallel to the proximal-distal razor connector axis 24 along the bottom side 36 of the razor connector 10 and a second section diverging towards the top side 32 of the razor connector 10. This configuration may, in instances, be selected to allow the razor cartridge 100 to pivot relative to an axis disposed orthogonally to the proximal-distal razor connector axis 24, while preventing movement orthogonally to the proximal-distal razor connector axis 24.

In embodiments, the receiving head 22 may comprise a top side 34 (shown in Figure 2) and a bottom side 38 (shown in Figure 5). The top 34 and bottom side 38 of the receiving head 22 may be defined accordingly to the top 32 and bottom side 36 of the razor connector 10. As shown in figures 5 and 6 the flexible tongue 14 may be connected to the receiving head 22, more specifically to the receiving head's 22 proximal end and in particular the receiving head's 22 bottom side's 38 proximal end. This configuration may increase the length of the tongue, which may allow for a greater deflection at the same force compared to a shorter tongue, which may improve the alignment of the razor cartridge 100 to the user's skin during the shaving action.

In embodiments, the tongue may have a polygonal cross-section, more specifically a square, rectangular or octagonal shape and in particular a rectangular shape.

In embodiments, a corner of the polygonal cross-section may be round. The rounded edges may facilitate sliding the tongue into the razor cartridge's 100 corresponding feature.

According to this disclosure, the at least one protrusion 20 may be placed at the top side 32 of the razor connector 10, in particular on the at least one flap's 16 distal section 42 at the top side 32. In embodiments, the at least one protrusion 20 may be placed at the bottom side 36 of the razor connector 10, in particular on the at least one flap's 16 distal section 42 at the bottom side 36. As shown in Figure 5 and Figure 6, the at least one flap 16 may comprise at least one protrusion 20 on the at least one flap's 16 distal section 42 at both the top side 32 and bottom side 36. This configuration may improve the release of the razor cartridge 100. A protrusion 20 placed only at the top side 32 or bottom side 36 may only tilt the razor cartridge 100 when the at least one flap 16 is actuated. A protrusion at both the top side during the actuation of the at least one flap 16 push the razor cartridge 100 straight towards the razor connector's 10 distal end, which may release the razor cartridge 100. However, it may also be sufficient to place the at least one protrusion 20 at only either the top side 32 or the bottom side 36. In particular, if the at least one protrusion 20 is placed on the side comprising the interlocking feature, in particular the recess 18, the at least one protrusion 20 may push the razor cartridge 100 so far towards the distal end on that side, that the razor cartridge 100 is released from the razor connector 10, although the overall razor cartridge 100 only tilts relative to the razor connector 10.

In embodiments, the interlocking feature may be positioned proximally of the receiving head's 22 distal end, more specifically on the bottom side of the razor connector 10 on the receiving head 22 proximally of the receiving head's 22 distal end and in particular on the bottom side of the razor connector 10 on the receiving head 22 proximally of the receiving head's 22 distal end adjacent to the tongue. Placing the interlocking feature, in particular a recess 18 on the bottom side 38 of the razor connector 10 may be used e.g. if the bottom side 38 of the razor connector 10 is facing against the shaving direction, in some instances, as during the shaving action the interlocking feature may be pressed together, due to the forces transferred to the razor cartridge 100 during the shaving action.

As mentioned above, in embodiments, the razor connector 10 may comprise a plurality of layers, in particular a plurality of layers substantially parallel to each other. In embodiments, a layer of the plurality of layers may have a thickness between about 5 µm to about 100 µm, more specifically between about 10 µm to about 50 µm and in particular between about 15 µm to about 30 µm.

In embodiments, a layer of the plurality of layers may have a thickness between about 0.05 mm to about 0.6 mm, more specifically between about 0.1 µm to about 0.4 mm and in particular between about 0.15 mm to about 0.3 mm.

The thickness of the plurality of layers may depend upon the process used for manufacturing. Further, a smaller layer thickness may lead to an increased manufacturing time of the razor connector 10, but may also increase the mechanical stability and dimensional accuracy of the razor connector 10.

In embodiments, the razor connector 10 may comprise a first polymer, more specifically a photopolymer and in particular an ABS-like polymer and/or polypropylene-like polymer. A photopolymer and in particular an ABS-like polymer and/or polypropylene-like polymer may be processable by an additive manufacturing process such as stereolithography. The first polymer may have a Shore D hardness between about 50 to about 120, more specifically between about 55 to about 100 and in particular between about 60 to about 90, measured according to ISO 868:2003. The first polymer may be for example Durus or Rigur, by the company Stratasys, Ltd.

In embodiments, the razor connector 10 may comprise a second polymer. The second polymer may have a Shore A hardness between about 10 to about 95, more specifically between about 25 to about 80 and in particular between about 35 to about 60, measured according to ASTM D2240 - 15. The second polymer may be for example Tango or Agilus 30, by the company Stratasys, Ltd.

In embodiments, the razor connector 10 may comprise a third polymer, more specifically a thermoplastic polymer and in particular ABS and/or polypropylene.

In embodiments, the razor connector 10 may comprise a fourth polymer, more specifically a thermoplastic elastomer and in particular a TPA, a TPC, a TPO, a TPS, a TPV, a TPZ and/or a TPU.

Thermoplastic elastomers, as well as ABS and/or polypropylene may be processable by technologies wherein a solid material is liquified and subsequently resolidified for manufacturing, for example extrusion. Thermoplastic elastomers, as well as ABS and/or polypropylene may in particular be processable by additive manufacturing technologies such as fused filament fabrication and/or selective laser melting.

Additive manufacturing technologies may also be employed as multi-material processes, wherein a one-piece part comprising at least two different materials can be manufactured. For example, stereolithography and fused filament fabrication may be used to create multi-material parts. In fused filament fabrication the manufacturing device, e.g. the 3D-printer, may comprise multiple nozzles, wherein each nozzle is configured to extrude a different polymer. In stereolithography the part to be produced may change between vats comprising different precursors. Hence, additive manufacturing may be employed to optimize properties of certain parts and/or regions of the razor connector 10 by varying the choice of material locally.

The second and/or fourth polymer may have a lower modulus of elasticity compared to the first and/or third polymer. A material with a lower modulus of elasticity exhibits a higher degree of deformation when exposed to the same force compared to a material with a higher modulus of elasticity. The second and/or fourth polymer may have a lower hardness, in particular Shore A and/or Shore D hardness, compared to the first and/or third polymer, which may allow for a higher degree of deformation of the second and/or fourth compared to the first and/or third polymer when exposed to the same force.

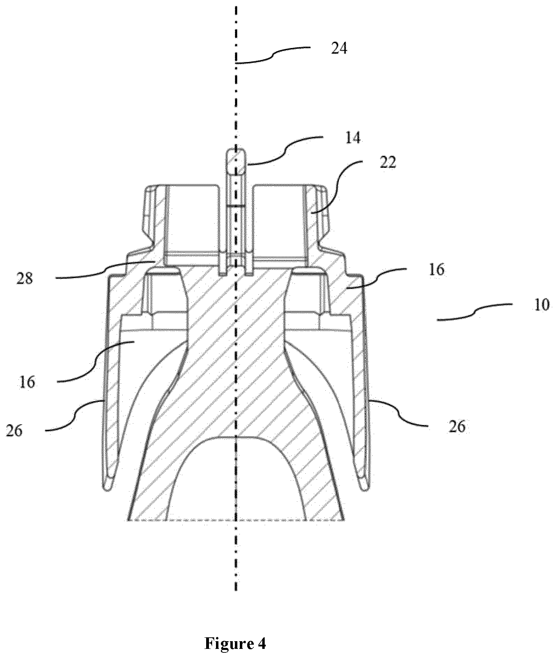

In embodiments, the at least one flap 16 may be connected to the razor connector 10 at at least one connection shoulder 28, as shown in Figure 4. In embodiments, the at least one flap 16 may be connected to the receiving head 22 at at least one connection shoulder 28. In embodiments, the at least one flap 16 may perform a hinge-type movement relative to the razor connector 10 in particular a hinge-type movement wherein the connection shoulder 28 acts as an axis of rotation. In embodiments, the at least one flap 16 may perform a hinge-type movement relative to the receiving head 22 in particular a hinge-type movement wherein the connection shoulder 28 acts as an axis of rotation. The term "hinge-type movement" within this disclosure is well-known in the art and attributed its common meaning in this technical field. In some embodiments, the term "hinge-type movement" may refer to the at least one flap 16 performing a rotational movement relative to the razor connector and/or receiving head 22 around the connection shoulder 28. The at least one flap may be connected to the receiving head 22 at two connection shoulders 28, wherein one connection shoulder is positioned on the top side 32 and/or top side 34 of the receiving head 22 and wherein one connection shoulder is positioned at the bottom side 36 and/or bottom side 38 of the receiving head 22. In embodiments, the connection shoulder 28 may comprise the second and/or fourth polymer. In embodiments, the connection shoulder 28 may comprise the second and/or fourth polymer and the at least one flap 16 and/or the receiving head 22 comprise the first and/or third polymer. Manufacturing the connection shoulder 28 with a material exhibiting lower modulus of elasticity may reduce the required force to actuate the at least one flap 16.

In embodiments, the flexible tongue 14 may comprise the first and/or third polymer. In embodiments, the flexible tongue 14 may comprise the second and/or fourth polymer. The flexible tongue 14 comprising the second and/or fourth polymer, more specifically a second and/or fourth polymer exhibiting a lower modulus of elasticity compared to the first and/or third, may in use allow the razor cartridge 100 to align to the skin of the user under less force. However, a flexible tongue 14 comprising the first and/or third polymer with a higher modulus of elasticity may provide a higher stability to the razor cartridge 100. In embodiments, the flexible tongue 14 may comprise the first and/or third polymer and the second and/or fourth polymer. This may allow adjusting the flexible tongue's 14 modulus of elasticity to an optimized value.

In embodiments, the at least one flap 16 may comprise the first and/or third polymer.

In embodiments, the protrusion 20 may comprise the first and/or third polymer. The at least one flap 16 and/or protrusion 20 comprising the first and/or third polymer, more specifically a first and/or third polymer exhibiting a higher modulus of elasticity may lead to a higher rigidity of the parts which may improve the actuation mechanism, in particular the release of the razor cartridge 100 upon actuation. A higher rigidity of the at least one flap 16 may lead to a higher proportion of the force applied during actuation to be transferred to the protrusion 20, in particular as less force is absorbed by elastic deformation of the flap 16. Similarly, a higher rigidity of the protrusion 20 may lead to a higher force transfer to the razor cartridge 100, as less force is absorbed by elastic deformation of the protrusion 20.

In embodiments, the actuation surface may comprise the second and/or fourth polymer. The second and/or fourth polymer may have a higher tack and/or coefficient of friction compared to the second and/or fourth polymer and may therefore provide better grip to the user.

In a second aspect, the present invention defines a razor system comprising a razor connector 10 according to any one of claims 1 to 13 and a razor cartridge 100, wherein the razor cartridge 100 is releasably attached to the razor connector 10.

In embodiments, the razor system may further comprise a razor handle 12 connected to the razor connector 10.

In a third aspect, the present invention defines a process for manufacturing a razor connector 10 according to any one of claims 1 to 13 comprising additive manufacturing, material jetting, fused filament fabrication, stereolithography and/or selective laser sintering.

The scope of protection of the current invention is defined by the appended claims.

## Claims

1. A razor connector (10) configured to connect a razor cartridge (100) to a razor handle (12) comprising:
a tongue (14), configured to allow pivotable movement of the razor cartridge (100) relative to the razor handle (12);
at least one interlocking feature (18) configured to interlock with at least one interlocking part of the razor cartridge (100);
at least one flap (16) configured to disconnect the razor cartridge (100) from the razor connector (10) upon actuation;
wherein the at least one flap (16) comprises a protrusion (20); **characterised in that** the protrusion (20) is configured to disconnect the razor cartridge (100) from the razor connector (10) upon actuation of the at least one flap (16) by pushing the interlocking part of the razor cartridge (100) out of the interlocking feature.

2. The razor connector (10) according to claim 1, wherein the tongue is a flexible tongue (14).

3. The razor connector (10) according to any preceding claim, wherein the at least one interlocking feature is a recess (18), in particular a recess (18) configured to interlock with at least one interlocking protrusion of the razor cartridge (100).

4. The razor connector (10) according to any preceding claim, wherein the flap (16) is integrally formed with the interlocking feature.

5. The razor connector (10) according to any preceding claim, wherein the razor connector (10) is a one-piece part.

6. The razor connector (10) according to any preceding claim, wherein the razor connector (10) comprises a plurality of layers, in particular a plurality of layers substantially parallel to each other.

7. The razor connector (10) according to any preceding claim, wherein the at least one flap (16) is configured to release the at least one interlocking part of the razor cartridge (100) from the at least one interlocking feature when actuated.

8. The razor connector (10) according to any preceding claim, wherein the protrusion (20) extends towards the razor cartridge (100) when the razor cartridge (100) is connected to the razor connector (10).

9. The razor connector (10) according to claim 8, wherein the protrusion (20) is configured to disconnect the razor cartridge (100) from the razor connector (10) upon actuation of the at least one flap (16) by pushing the razor cartridge's (100) protrusion out of the razor connector's (10) recess (18).

10. The razor connector (10) according to claim any preceding claim, wherein the protrusion (20) is configured to preload the razor cartridge (100) when the razor cartridge (100) is connected to the razor connector (10).

11. The razor connector (10) according to any preceding claim, wherein the razor connector (10) comprises two flaps (16) opposing one another.

12. The razor connector (10) according to any preceding claim, wherein the at least one flap (16) is arranged in proximal direction of a receiving head's (22) distal end.

13. The razor connector (10) according to any preceding claim, wherein the razor connector has a top side (32) and a bottom side (36), wherein the tongue extends from a distal end of the razor connector (10), wherein the razor connector (10) is connectable to the razor handle (12) at a proximal end, wherein the distal end and the proximal end define a proximal-distal razor connector axis (24) and wherein the tongue comprises a first section extending parallel to the proximal-distal razor connector axis (24) along the bottom side (36) of the razor connector (10) and a second section diverging towards the top side (32) of the razor connector (10).

14. A razor system comprising a razor connector (10) according to any preceding claim and a razor cartridge (100), wherein the razor cartridge (100) is releasably attached to the razor connector (10).

15. A process for manufacturing a razor connector (10) according to any one of claims 1 to 13 comprising:
additive manufacturing, material jetting, fused filament fabrication, stereolithography and/or selective laser sintering.

## Patentansprüche

1. Ein Rasiererverbinder (10), der konfiguriert ist, um eine Rasiererkartusche (100) mit einem Rasierergriff (12) zu verbinden, umfassend:
eine Zunge (14), die konfiguriert ist, um eine Schwenkbewegung der Rasiererkartusche (100) relativ zu dem Rasierergriff (12) zu ermöglichen;
mindestens eine Verriegelungseinrichtung (18), die konfiguriert ist, um mit mindestens einem Verriegelungsteil der Rasiererkartusche (100) zu verriegeln;
mindestens eine Klappe (16), die konfiguriert ist, um bei Betätigung die Rasiererkartusche (100) von dem Rasiererverbinder (10) zu trennen;
wobei die mindestens eine Klappe (16) einen Vorsprung (20) umfasst;
**dadurch gekennzeichnet, dass**
der Vorsprung (20) konfiguriert ist, um die Rasiererkartusche (100) bei Betätigen der mindestens einen Klappe (16) von dem Rasiererverbinder (10) durch Drücken des Verriegelungsteils der Rasiererkartusche (100) aus der Verriegelungseinrichtung zu trennen.

2. Der Rasiererverbinder (10) nach Anspruch 1, wobei die Zunge eine flexible Zunge (14) ist.

3. Der Rasiererverbinder (10) nach einem der vorstehenden Ansprüche, wobei die mindestens eine Verriegelungseinrichtung eine Aussparung (18) ist, insbesondere eine Aussparung (18), die konfiguriert ist, um mit mindestens einem Verriegelungsvorsprung der Rasiererkartusche (100) zu verriegeln.

4. Der Rasiererverbinder (10) nach einem der vorstehenden Ansprüche, wobei die Klappe (16) mit der Verriegelungseinrichtung einstückig ausgebildet ist.

5. Der Rasiererverbinder (10) nach einem der vorstehenden Ansprüche, wobei der Rasiererverbinder (10) ein einteiliges Teil ist.

6. Der Rasiererverbinder (10) nach einem der vorstehenden Ansprüche, wobei der Rasiererverbinder (10) eine Vielzahl von Schichten umfasst, insbesondere eine Vielzahl von im Wesentlichen parallel zueinander verlaufenden Schichten.

7. Der Rasiererverbinder (10) nach einem der vorstehenden Ansprüche, wobei die mindestens eine Klappe (16) konfiguriert ist, um bei Betätigung das mindestens eine Verriegelungsteil der Rasiererkartusche (100) von der mindestens einen Verriegelungseinrichtung zu lösen.

8. Der Rasiererverbinder (10) nach einem der vorstehenden Ansprüche, wobei sich der Vorsprung (20) in Richtung der Rasiererkartusche (100) erstreckt, wenn die Rasiererkartusche (100) mit dem Rasiererverbinder (10) verbunden ist.

9. Der Rasiererverbinder (10) nach Anspruch 8, wobei der Vorsprung (20) konfiguriert ist, um die Rasiererkartusche (100) bei Betätigen der mindestens einen Klappe (16) durch Drücken des Vorsprungs der Rasiererkartusche (100) aus der Aussparung (18) des Rasiererverbinders (10) von dem Rasiererverbinder (10) zu trennen.

10. Der Rasiererverbinder (10) nach einem der vorstehenden Ansprüche, wobei der Vorsprung (20) konfiguriert ist, um die Rasiererkartusche (100) vorzuladen, wenn die Rasiererkartusche (100) mit dem Rasiererverbinder (10) verbunden ist.

11. Der Rasiererverbinder (10) nach einem der vorstehenden Ansprüche, wobei der Rasiererverbinder (10) zwei einander gegenüberliegende Klappen (16) umfasst.

12. Der Rasiererverbinder (10) nach einem der vorstehenden Ansprüche, wobei die mindestens eine Klappe (16) in proximaler Richtung des distalen Endes eines Aufnahmekopfs (22) angeordnet ist.

13. Der Rasiererverbinder (10) nach einem der vorstehenden Ansprüche, wobei der Rasiererverbinder eine Oberseite (32) und eine Unterseite (36) hat, wobei sich die Zunge von einem distalen Ende des Rasiererverbinders (10) erstreckt, wobei der Rasiererverbinder (10) an einem proximalen Ende mit dem Rasierergriff (12) verbindbar ist, wobei das distale Ende und das proximale Ende eine proximal-distale Rasiererverbinderachse (24) definieren, und wobei die Zunge einen ersten Abschnitt, der parallel zu der proximal-distalen Rasiererverbinderachse (24) entlang der Unterseite (36) des Rasiererverbinders (10) verläuft, und einen zweiten Abschnitt, der in Richtung der Oberseite (32) des Rasiererverbinders (10) abzweigt, umfasst.

14. Ein Rasierersystem, umfassend einen Rasiererverbinder (10) nach einem der vorstehenden Ansprüche und eine Rasiererkartusche (100), wobei die Rasiererkartusche (100) an dem Rasiererverbinder (10) lösbar befestigt ist.

15. Ein Verfahren zum Herstellen eines Rasiererverbinders(10) nach einem der Ansprüche 1 bis 13, umfassend:
additive Fertigung, Materialstrahlen, Schmelzdrahtverarbeitung, Stereolithografie und/oder selektives Lasersintern.

## Revendications

1. Un élément de liaison de rasoir (10) conçu pour relier une cartouche de rasoir (100) à un manche de rasoir (12) comprenant :
une languette (14), conçue pour permettre un mouvement pivotant de la cartouche de rasoir (100) par rapport au manche de rasoir (12) ;
au moins une caractéristique d'enclenchement (18) conçue pour s'enclencher avec au moins une pièce d'enclenchement de la cartouche de rasoir (100) ;
au moins un rabat (16) conçu pour désolidariser la cartouche de rasoir (100) de l'élément de liaison de rasoir (10) lors de l'actionnement ;
dans lequel l'au moins un rabat (16) comprend une protubérance (20) ;
**caractérisé en ce que**
la protubérance (20) est conçue pour désolidariser la cartouche de rasoir (100) de l'élément de liaison de rasoir (10) lors de l'actionnement de l'au moins un rabat (16) en poussant la pièce d'enclenchement de la cartouche de rasoir (100) hors de la caractéristique d'enclenchement.

2. L'élément de liaison de rasoir (10) selon la revendication 1, dans lequel la languette est une languette flexible (14).

3. L'élément de liaison de rasoir (10) selon l'une quelconque revendication précédente, dans lequel l'au moins une caractéristique d'enclenchement est un évidement (18), en particulier un évidement (18) conçu pour s'enclencher avec au moins une protubérance d'enclenchement de la cartouche de rasoir (100).

4. L'élément de liaison de rasoir (10) selon l'une quelconque revendication précédente, dans lequel le rabat (16) est formé d'un seul tenant avec la caractéristique d'enclenchement.

5. L'élément de liaison de rasoir (10) selon l'une quelconque revendication précédente, dans lequel l'élément de liaison de rasoir (10) est une pièce monobloc.

6. L'élément de liaison de rasoir (10) selon l'une quelconque revendication précédente, dans lequel l'élément de liaison de rasoir (10) comprend une pluralité de couches, en particulier une pluralité de couches sensiblement parallèles les unes aux autres.

7. L'élément de liaison de rasoir (10) selon l'une quelconque revendication précédente, dans lequel l'au moins un rabat (16) est conçu pour libérer l'au moins une pièce d'enclenchement de la cartouche de rasoir (100) de l'au moins une caractéristique d'enclenchement lorsqu'il est actionné.

8. L'élément de liaison de rasoir (10) selon l'une quelconque revendication précédente, dans lequel la protubérance (20) s'étend vers la cartouche de rasoir (100) lorsque la cartouche de rasoir (100) est reliée à l'élément de liaison de rasoir (10).

9. L'élément de liaison de rasoir (10) selon la revendication 8, dans lequel la protubérance (20) est conçue pour désolidariser la cartouche de rasoir (100) de l'élément de liaison de rasoir (10) lors de l'actionnement de l'au moins un rabat (16) en poussant la protubérance de la cartouche de rasoir (100) hors de l'évidement (18) de l'élément de liaison de rasoir (10).

10. L'élément de liaison de rasoir (10) selon l'une quelconque revendication précédente, dans lequel la protubérance (20) est conçue pour précharger la cartouche de rasoir (100) lorsque la cartouche de rasoir (100) est reliée à l'élément de liaison de rasoir (10).

11. L'élément de liaison de rasoir (10) selon l'une quelconque revendication précédente, dans lequel l'élément de liaison de rasoir (10) comprend deux rabats (16) opposés l'un à l'autre.

12. L'élément de liaison de rasoir (10) selon l'une quelconque revendication précédente, dans lequel l'au moins un rabat (16) est agencé dans une direction proximale d'une extrémité distale d'une tête de réception (22).

13. L'élément de liaison de rasoir (10) selon l'une quelconque revendication précédente, dans lequel l'élément de liaison de rasoir a un côté supérieur (32) et un côté inférieur (36), dans lequel la languette s'étend à partir d'une extrémité distale de l'élément de liaison de rasoir (10), dans lequel l'élément de liaison de rasoir (10) peut être relié au manche de rasoir (12) au niveau d'une extrémité proximale, dans lequel l'extrémité distale et l'extrémité proximale définissent un axe proximal-distal de l'élément de liaison de rasoir (24) et dans lequel la languette comprend une première section s'étendant parallèlement à l'axe proximal-distal de l'élément de liaison de rasoir (24) le long du côté inférieur (36) de l'élément de liaison de rasoir (10) et une seconde section divergeant vers le côté supérieur (32) de l'élément de liaison de rasoir (10).

14. Un système de rasoir comprenant un élément de liaison de rasoir (10) selon l'une quelconque revendication précédente et une cartouche de rasoir (100), dans lequel la cartouche de rasoir (100) est fixée de manière amovible à l'élément de liaison de rasoir (10).

15. Un procédé de fabrication d'un élément de liaison de rasoir (10) selon l'une quelconque des revendications 1 à 13, comprenant :
la fabrication additive, la projection de matériau, la fabrication par filament fondu, la stéréolithographie et/ou le frittage sélectif par laser.
